Europäisches Patentamt

European Patent Office

Office européen des brevets

(11) Numéro de publication: **0 320 375**
A2

# (12) DEMANDE DE BREVET EUROPEEN

(21) Numéro de dépôt: **88403097.4**

(22) Date de dépôt: **07.12.88**

(51) Int. Cl.⁴: **C 04 B 28/02**
C 04 B 41/50
//(C04B28/02,14:20,14:30,22:06,
22:08,24:08)

(30) Priorité: **08.12.87 FR 8717088**

(43) Date de publication de la demande:
**14.06.89 Bulletin 89/24**

(84) Etats contractants désignés:
**AT BE CH DE ES GB GR IT LI LU NL SE**

(71) Demandeur: **Bancal, Jean-Charles**
**22, rue Spontini**
**F-75116 Paris (FR)**

(72) Inventeur: **Bancal, Jean-Charles**
**22, rue Spontini**
**F-75116 Paris (FR)**

(74) Mandataire: **Bugnon-Hays, Claudine**
**PATCO S.A. 10, rue Vivienne**
**F-75002 Paris (FR)**

(54) **Revêtement hydrofuge à haut pouvoir réfléchissant.**

(57) La présente invention concerne un revêtement imperméabilisant à base de ciment comportant :
- 50 à 80 % en poids de ciment,
- 0 à 5 % en poids de chaux hydratée,
- 1 à 8 % en poids de dioxyde de titanium,
- 0 à 5 % en poids de paillettes mica,
- 0,5 à 2 % d'en agent hydrophobe.
Applications : Revêtement pour tous supports traditionnels du bâtiment.

EP 0 320 375 A2

Bundesdruckerei Berlin

## Description

## Revêtement hydrofuge à haut pouvoir réfléchissant

La présente invention est relative à un revêtement imperméabilisant à base de ciment.

Ce revêtement est, notamment, applicable pour la formation d'enduits destinés à être appliqués sur des supports traditionnels du bâtiment, tels que le béton, la brique, l'enduit au mortier hydraulique.

Elle a pour objet de réaliser un revêtement imperméabilisant auto-lavable à haut pouvoir réfléchissant de la lumière et de la chaleur.

La présente invention concerne, en particulier, un revêtement imperméabilisant à base de ciment comprenant :
- 50 à 80 % en poids de ciment,
- 0 à 5 % en poids de chaux hydratée,
- 1 à 8 % en poids de dioxyde de titanium,
- 0 à 5 % en poids de pailletes mica,
- 0,5 à 2 % d'un agent hydrophobe.

Le produit selon la présente invention peut être livré sous la forme d'une poudre diluable à l'eau, dans des proportions variables suivant la nature du revêtement souhaité. Elle permet d'acquérir des qualités d'adhérence et d'imperméabilisation particulièrement avantageuses.

Par ailleurs, le revêtement ainsi réalisé présente une porosité aux transferts gazeux et un effet perlant permettant d'assurer un auto-lavage du revêtement.

Selon un mode de réalisation préféré, le revêtement comporte, en outre, 1 à 5 % d'un agent de cohésion du film obtenu.

Cet agent de cohésion du film assure une tenue dans le temps prolongée.

La composition comporte, de plus, 1 à 6 % de chlorure de sodium, l'agent hydrophobe étant de préférence choisi parmi les oléates ou les stéarates d'aluminium, de zinc, de magnésium ou de potassium.

L'agent de cohésion du film est de préférence constitué par un sulfate d'aluminium ou de magnésium.

Selon un mode de réalisation particulièrement avantageux, le revêtement imperméabilisant selon la présente invention comporte, pour 100 parties de matière sèche :
- 75 parties de ciment Portland blanc,
- 5 parties de chaux hydratée,
- 4 parties de dioxyde de titanium,
- 4 parties de chlorure de sodium,
- 3 parties de sulfate d'aluminium,
- 3 parties de sulfate de magnésium,
- 1 partie de stéarate d'aluminium,
- 5 parties de paillettes mica.

Les sulfates contribuent à la cohésion du film, les stéarates lui donnent la qualité hydrophobe recherchée et les oxydes de titanium confèrent au revêtement selon la présente invention un haut pouvoir réfléchissant aussi bien de la lumière que de la chaleur.

Selon une variante, le revêtement selon la présente invention comporte, en outre, 20 parties en poids d'un agent colorant.

Le revêtement ainsi réalisé peut être appliqué sur tous supports traditionnels du bâtiment : béton, brique, enduit au mortier hydraulique, enduit à la chaux, panneaux de fibrociment, plâtre, bois, etc...

La composition pour revêtement imperméabilisant sera préférentiellement livrée sous forme de poudre. Cette poudre sera diluée au moment de l'usage avec une proportion d'eau fonction de la nature du support.

La dilution pour revêtement constitué d'une première couche sera relativement faible. Cette première couche est fréquemment destinée à reprendre les joints, épauflures et autres défauts de planéité du support. La dilution sera faite jusqu'à obtention d'une pâte dont l'application verticale n'entraîne pas de fluage sur une épaisseur de 5 mm.

Pour la réalisation d'une couche de finition, une dilution supérieure sera recherchée, de façon à pouvoir appliquer le revêtement selon la présente invention sous la forme d'un film mince d'une épaisseur de 0,3 à 0,4 mm.

Le revêtement sec obtenu à l'aide de la composition de l'invention est étanche, en particulier au ruissellement des eaux de pluie, imputrécible, incombustible et isolant thermiquement et phoniquement.

La présente invention est décrite de façon non limitative, à titre d'exemple. La portée de la protection n'est pas restreinte aux compositions décrites mais s'étend au contraire à toutes les variantes, notamment comportant divers additifs.

## Revendications

1) Revêtement imperméabilisant à base de ciment, caractérisé en ce qu'il comprend :
- 50 à 80 % en poids de ciment,
- 0 à 5 % en poids de chaux hydratée,
- 1 à 8 % en poids de dioxyde de titanium,
- 0 à 5 % en poids de paillettes mica,
- 0,5 à 2 % d'un agent hydrophobe.

2) Revêtement imperméabilisant à base de ciment, caractérisé en ce qu'il comprend, en outre, 1 à 8 % d'un agent de cohésion du film obtenu.

3) Revêtement imperméabilisant à base de ciment selon l'une quelconque des revendications 1 à 2, caractérisé en ce qu'il comprend, en outre, 1 à 6 % de chlorure de sodium.

4) Revêtement imperméabilisant à base de ciment selon l'une quelconque des revendications 1 à 3, caractérisé en ce que l'agent hydrophobe est choisi parmi les oléates ou les stéarates d'aluminium, de zinc, de magnésium ou de potassium.

5) Revêtement imperméabilisant, à base de ciment selon l'une quelconque des revendications 2 à 3, caractérisé en ce que l'agent de cohésion du film est constitué par un sulfate d'aluminium ou de magnésium.

6) Revêtement imperméabilisant à base de ciment selon la revendication 5, caractérisé en ce qu'il comprend pour 100 parties de matière sèche, 75 parties de ciment Portland blanc, 5 parties de chaux hydratée, 4 parties de dioxyde de titanium, 4 parties de chlorure de sodium, 3 parties de sulfate d'aluminium, 3 parties de sulfate de magnésium, 1 partie de stéarate d'aluminium, 5 parties de paillettes mica.

7) Revêtement imperméabilisant à base de ciment selon l'une quelconque des revendications 1 à 6, caractérisé en ce qu'il comporte, de plus, 1 à 20 parties en poids d'un agent colorant.